(19)

**Europäisches Patentamt**
**European Patent Office**
**Office européen des brevets**

(11) **EP 3 404 357 A1**

(12) **EUROPEAN PATENT APPLICATION**

(43) Date of publication:
**21.11.2018 Bulletin 2018/47**

(51) Int Cl.:
***G01B 11/06*** *(2006.01)*

(21) Application number: **17382284.2**

(22) Date of filing: **18.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Tech Pro Packag S.L.**
**01470 Amurrio (ES)**

• **Ingenet Automatizacion, S.L.**
**48410 Orozko (ES)**

(72) Inventors:
• **GOMEZ ZUBICARAY, Unai**
**01400 Laudio (ES)**
• **UDAETA SAN MARTIN, Xabier**
**01470 Amurrio (ES)**

(74) Representative: **Igartua, Ismael et al**
**Galbaian S. Coop.**
**Garaia Parke Teknologikoa**
**Goiru Kalea 1**
**20500 Arrasate-Mondragón (ES)**

(54) **METHOD AND APPARATUS FOR THE CONTROL OF CONTAINERS**

(57) Method and apparatus for the control of containers (10) which determine the thickness (e) of the bottom (11) of said containers (10), wherein the containers (10) are conveyed by conveyance means (20) and the containers (10) are measured during conveyance. During the measurement, emission-reflection beams (41, 42, 51, 52) are emitted from measurement sensors (40, 50) arranged facing one another, respectively striking the inner face (11 a) through a mouth (13) of the container (10), as well as the outer face (11 b), a first and a second measurement signal being obtained with the respective distances (d1, d2) between the measurement sensors (40, 50) and the inner face and outer face (11 a, 11 b) of the bottom (11) of the container (10), and the thickness (e) of the bottom (11) is calculated from said distances (d1, d2) and the distance (D) between both measurement sensors (40, 50), a signal indicating thickness (e) being obtained.

FIG. 3

## Description

TECHNICAL FIELD

The present invention relates to methods and apparatus for the control of containers.

PRIOR ART

Methods and apparatus in the prior art are known to allow determining at least one dimensional parameter of a part after it was manufactured in a machine, said parameter being measured between said machine and the next machine in the process of manufacturing said part. The part is conveyed from the machine in which it was manufactured and is arranged in a measuring device for measuring the dimensional parameter of said part, using measurement sensors such as lasers for example.

EP0388949A2 describes a method and apparatus for the control of containers for measuring the length of containers manufactured in a forming machine. The containers are conveyed by conveyance means from the forming machine, and each container is measured during said conveyance by means of a measuring device.

DISCLOSURE OF THE INVENTION

The object of the invention is to provide a method of determining the thickness of the bottom of a container manufactured in a forming machine, and an apparatus suitable for implementing said method, as defined in the claims.

One aspect of the invention relates to a method for the control of containers manufactured in a forming machine, the containers comprising a mouth and a bottom, and the thickness of the bottom of the containers being determined by means of the method, the method comprising a conveyance step for conveying the containers by conveyance means from the forming machine, and a measuring step for measuring each container during the conveyance step. During the measuring step, a first electromagnetic radiation emission-reflection beam is emitted from a first measurement sensor, striking the inner face of the bottom of the container through the mouth of said container; a second electromagnetic radiation emission-reflection beam is emitted simultaneously from a second measurement sensor, arranged facing the first measurement sensor, striking the outer face of the bottom of the container, a first measurement signal being obtained with the distance between the first measurement sensor and the inner face of the bottom of the container, and a second measurement signal being obtained with the distance between the second measurement sensor and the outer face of the bottom of the container, and the thickness of the bottom being calculated from said distances and the distance between both measurement sensors, a measurement signal indicating thickness being obtained with said thickness.

Another aspect of the invention relates to an apparatus for the control of containers manufactured in a forming machine, the containers comprising a mouth and a bottom, and the thickness of the bottom of the containers being determined by means of the apparatus. The apparatus comprises conveyance means for conveying the containers from the forming machine, and a measuring device arranged next to the conveyance means. The measuring device comprises a first measurement sensor configured for emitting a first electromagnetic radiation emission-reflection beam striking at least one point of incidence of the inner face of the bottom of the container through the mouth of said container, a second measurement sensor arranged facing the first measurement sensor, configured for emitting a second electromagnetic radiation emission-reflection beam striking at least one point of incidence of the outer face of the bottom of the container, and a control unit configured for calculating the thickness of the bottom of the container from a first measurement signal with the distance between the first measurement sensor and the inner face of the bottom of the container, a second measurement signal with the distance between the second measurement sensor and the outer face of the bottom of the container, and the distance between both measurement sensors, generating a measurement signal indicating thickness with the thickness.

The method and the apparatus of the invention aid in determining the thickness of the bottom of a container manufactured in a container forming machine, during the conveyance of said container from the forming machine to the next machine in the process of manufacturing the container. This measurement can be taken by means of a first sensor generating electromagnetic radiation emission-reflection beams striking and reflecting off the inner face of the bottom of the container through the open mouth of the end of said container, and a second sensor generating electromagnetic radiation emission-reflection beams striking and reflecting off the outer face of the bottom of the container.

Unlike the prior art in which the length of the container is measured, and the thickness of the bottom of the container can be indirectly calculated with said parameter, by establishing a ratio between the measured length and the defined standard length, and extrapolating said ratio to a ratio existing between the defined standard bottom thickness and the actual bottom thickness of the container to be calculated, the method and the apparatus of the invention determine thickness of the bottom of the container in a direct and real manner. A more productive and higher quality container manufacturing process is thereby obtained because the determination of the thickness of the bottom of the containers is more rigorous, and furthermore since container manufacturing processes are high-speed processes, the determination of the thicknesses during conveyance of the containers allows manufacturing said containers without generating later rejections in the manufacturing process, due to the erroneous determination of bottom thicknesses.

These and other advantages and features of the invention will become evident in view of the drawings and detailed description of the invention.

DESCRIPTION OF THE DRAWINGS

Figure 1 shows a perspective view of an embodiment of the apparatus of the invention.

Figure 2 shows a plan view of the apparatus of Figure 1.

Figure 3 shows a detailed plan view of a measuring device of the apparatus of Figure 1, for measuring the thickness of a container.

Figure 4 shows a plan view of the inner face of the bottom of the container, wherein the thickness of the bottom has been measured at a point of incidence in the center of the bottom, or at a plurality of points of incidence defining straight lines, arranged in different locations on the bottom of the container.

Figure 5 shows a side section view of the bottom of the container, with a profile of the thickness of the bottom of the container measured along a diameter of said container.

DETAILED DISCLOSURE OF THE INVENTION

The manufacture and the transformation of a metal container, particularly an aluminum container for a beverage or a hygiene product, for example, requires a process consisting of different machines or apparatus. Said machines are automatically linked to one another, and the transformation process is a high-speed process.

An example of a transformation process for transforming an aluminum container, the side surface of which is decorated with a design, comprises the following machines:

- Extrusion press: where an aluminum disc is transformed into a body such as a container. In the example of a cylindrical container, the body of the extruded container is a cylinder.
- Cutting machine: where the cylinder is cut to a given length.
- Washer: where the container is washed free of oils and fats.
- Inner varnisher: where the container is internally coated with a varnish.
- Lithographic unit: consisting of three machines in this process example:
- Varnisher: prepares the outside of the container, covering it prior to printing the design.
- Printer: prints the design on the container.
- Enameling machine: externally coats the container to protect the printing.
- Taper machine or necking machine: where the container is deformed and finished completely.

The process is completed with industrial ovens and storage cells.

When the process of manufacturing the aluminum container starts, machine parameters such as the pressure of the extrusion shaft, for example, are defined in the development of the extrusion press for manufacturing cylinders configuring the body of containers from aluminum discs. However, and until reaching the suitable temperature in said transformation process, many cylinders must be rejected because they do not comply with the correct measurements, in the dimensional parameters defined for the cylinders being manufactured. One of said dimensional parameters is the thickness of the bottom of the container.

If the cylinder bottom thickness does not comply with the defined specifications, for example the thickness is less than what is specified in at least one area of the bottom, said container may become deformed, or even worse break, during any later process for manufacturing the container, or in a process for filling said container.

After the setting of the extrusion press, and once the specifications of the defined dimensional parameters were met, the mass manufacture of the cylinders commenced. In order to assure that the cylinders still comply with the defined specifications, measurement controls for the cylinders are provided between the extrusion press and the next machine in the process, which is usually the cylinder cutting machine to adapt said cylinder to the defined length. One of said measurement controls is a measurement control for thickness of the bottom of the container.

It must be borne in mind that the process of manufacturing the container is a high-speed process, manufacturing up three containers per second for example, so in order to control cylinder bottom thickness, a number of cylinders the thickness of the bottom of which is measured in measurement devices, such as micrometers or dial gauges, for example, arranged outside the cylinder conveyance flow, are removed every so often from the conveyance means conveying said cylinders from the extrusion press to the cutting machine in a statistical manner. Another way to control cylinder bottom thickness without removing said cylinder from the conveyance means, as described in the prior art, is to measure the length of the cylinder on the conveyance means by calculating the thickness of the bottom indirectly, establishing a ratio between the measured length of each cylinder and the standard length defined for said cylinder, and extrapolating said ratio to a ratio existing between the standard bottom thickness defined for the cylinder, and the actual cylinder bottom thickness to be calculated.

These measurements serve to certify the goodness of the measurements of the groups of cylinders defined statistically or unitarily, and in the case of observing any measurements outside specifications or measurement trends, they serve to make decisions with respect to correcting the extrusion press machine parameters.

However, these dimensional controls do have a margin of error, and in the event of erring in the measurement or excessive time passing before making rectification decisions, large amounts of rejected containers, or an undetermined number of containers with defects, with bottom thicknesses in this example outside specifications, may be obtained. This entails process lengthening and the cost increase resulting from this lengthening, and/or a rise in cost of the final container.

A first aspect of the invention relates to a method for the control of the bodies of the containers, containers hereinafter referring to the bodies of the containers manufactured in the forming machine, the thickness of the bottom of said containers being determined by means of the method.

The object of the method is to measure and control thickness unitarily, i.e., on all the container units manufactured in the extruder, and continuously, i.e., measuring thickness of the container during conveyance of said container from the forming machine to the next machine in the process of manufacturing said container.

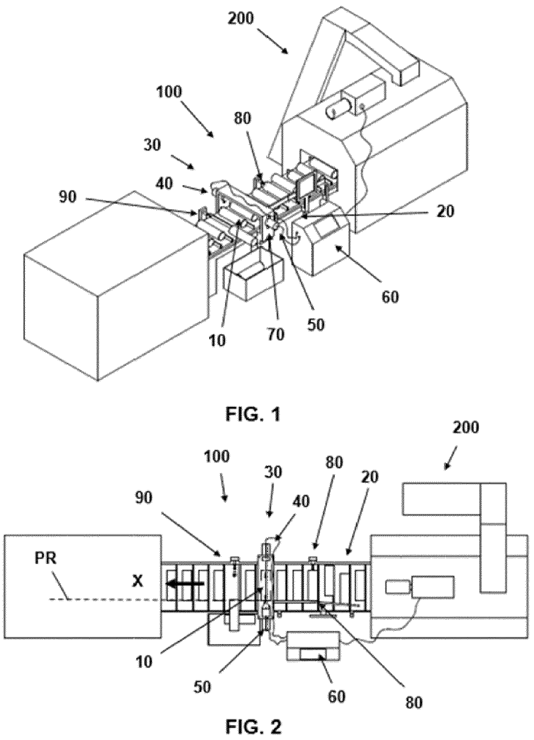

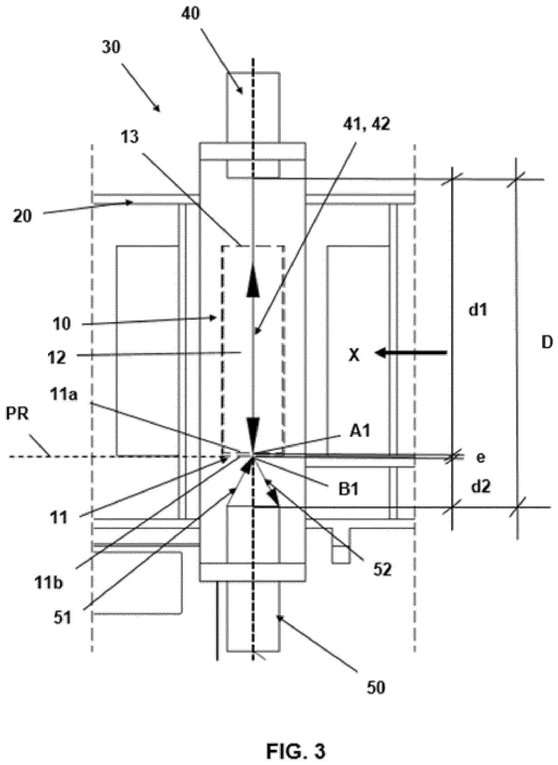

Figure 1 shows a perspective view of an embodiment of the apparatus 100 of the invention, Figure 2 shows a plan view of the apparatus 100 of Figure 1, and Figure 3 shows a detailed plan view of a measuring device 30 of the apparatus of Figure 1 for measuring thickness e of the container 10.

In one embodiment of the method for determining the thickness e of the bottom 11 of a container 10, said container 10 is a cylindrical container, but in other embodiments it may have other shapes. In any of those cases, after the first transformation in the extrusion machine the container comprises a body with side walls, with one end closed by a bottom, and the end opposite the bottom is open in a mouth. In the embodiment of the method that is shown, the body of the cylindrical container 10 is manufactured from an aluminum disc, but the material of the disc can also be an aluminum alloy or another material. The disc is arranged in a forming machine 200, this forming machine 200 being an extrusion press, but said forming machine may be, in other embodiments of the method, a drawing press, or another type of machine, in which a shaft or a piston acts on the disc at a given pressure, the shaft or piston hitting against the disc arranged in a forming mold, forming the body of the container.

Once the body of the container 10 is manufactured, said container 10 comprises a cylindrical body with side walls and a closed bottom 11 having a given thickness e. The container 10 has measurements for this type of product relating to hygiene or beverages, for example, with a diameter between 25 and 80 millimeters, a body length between 50 and 300 millimeters, a side wall thickness between 0.1 and 0.8 millimeters, and a bottom thickness between 0.20 and 2 millimeters, the width-to-length ratio of the container 10 therefore being large, about one to three, the container 10 for products of this type to be packaged being manufactured from metal, preferably aluminum or an aluminum alloy.

In a first conveyance step of the method, these cylindrical bodies (the cylindrical body will be referred to hereinafter as container 10), are placed on conveyance means 20, which is a conveyor belt in the embodiment shown, conveying the containers 10 from the forming machine 200 to the next machine in the process of manufacturing the container 10. The containers 10 are placed on the conveyance means 20 lying down inside housings of said conveyance means 20 which allow isolating each container 10 and prevent said containers 10 from getting mixed up when conveyed. The longitudinal axis of said containers 10 is arranged orthogonally with respect to a conveyance direction X. In other embodiments not shown in the drawings, the containers are conveyed standing upright, but also isolated from other containers to prevent containers from getting mixed up, and in this case also with the longitudinal axis of the containers 10 being orthogonal to the conveyance direction X.

The conveyance means 20 move in direction X shown by an arrow in Figures 2 and 3. A measuring device 30 for measuring the thicknesses of the bottom 11 of the container 10 is arranged in an area of the conveyance means 20, such that the conveyed containers 10 pass through said measuring device 30. In this embodiment, the measuring device 30 is arranged transverse to the conveyance direction X of the containers 10, by way of a bridge over the conveyance means 20, said containers 10 passing below the measuring device 30.

In this embodiment, the measuring device 30 comprises a first measurement sensor 40 at one end and on one side of the conveyance means 20, and a second measurement sensor 50 at the other end of the measuring device 30 and on the other side of the conveyance means 20. Both measurement sensors 40, 50 are arranged fixed to a structure of the measuring device 30 facing one another, the longitudinal axis of both sensors 40, 50 coinciding. The measurement sensors 40, 40 are therefore arranged on either side of the bottom 11 of the container 10, the measurement sensor 40 facing the inner face 11 a of the bottom 11 through a mouth 13 of the container 10, and the measurement sensor 50 facing the outer face 11 b of the bottom 11 of the container 10.

The measurement sensors 40, 50 are of the type generating a respective first electromagnetic radiation emission-reflection beam 41, 42 and a respective second electromagnetic radiation emission-reflection beam 51, 52 for said measurement sensors 40, 50, said beams 41, 42, 51, 52 striking at least one point of incidence An, Bn of the inner face 11 a and of the outer face 11 b of the bottom 11 of the container 10, respectively. In this embodiment of the measuring device 30, since the longitudinal axis of both measurement sensors 40, 50 coincides, the axis joining the points of incidence An, Bn is in turn parallel to the longitudinal axis of the container 10. Said measurement sensors 40, 50 each comprise an emitter that allows emitting the respective beams 41, 51, and a reflector that allows receiving the beams 42, 52 reflected from the inner face 11 a and from the outer face 11 b, respectively. In a measuring step for measuring the thickness e of the bottom 11 of the container 10, once the container 10 to be measured has been conveyed from the forming machine 200 to the measuring device 30, the measurement sensors 40, 50 measure a respective distance d1, d2 from each measurement sensor 40, 50 to the inner face 11 a and to the outer face 11 b of the bottom 11. With said measurement of the distances d1 and d2, the measurement sensors 40, 50 generate a respective first measurement signal and a respective second measurement signal, with the measured distances d1, d2.

The first emission-reflection beam 41, 42 is generated in the first measurement sensor 40 by means of chromatic confocal technology, conoscopic holography or common-path interferometry, or by another type of technology, said first beam 41, 42 being a narrow beam. This beam is referred to as narrow because it comprises at its origin a width of 60 micrometers, for example, wherein it can be considered that for beam emission and reflection purposes that beams 41, 42 are on one and the same axis. Said first emission-reflection beam 41, 42 is separated very little from the starting point (emission beam) and receiving point (reflection beam), and can enter and exit the container 10, striking the inner face 11 a of the bottom 11 of the container 10 through the mouth 13 of said container 10. This combined with the fact that the sensors are of the type working at high emission frequencies (in the order of 5-30 khz, for example), allow measuring distances between the front base of the first sensor 40 and the inner face 11 a of the bottom 11 of the container 10, said first emission-reflection beam 41, 42 entering and exiting through the mouth 13 of the containers 10, while these containers 10 are in motion, travelling in conveyance direction X, with the longitudinal axis of the containers 10 being orthogonal to said direction X. According to whatever the conveyance speed of the containers 10 is, and depending on the emission frequency of the first emission-reflection beam 41, 42, three points where thickness e is measured for each millimeter of length of the bottom 11 in the conveyance direction X can be obtained, for example

In this embodiment of the method, the second emission-reflection beam 51, 52 is generated in the second measurement sensor 50 by means of laser technology, said second beam 51, 52 being a triangular beam. This is a common type of sensor for measuring distances, provided that there is no problem with the direction of the axis of the emission-reflection beam with respect to nearby side walls that may interfere with the second emission-reflection beam 51, 52. However, in other embodiments of the measuring device 30, like the first measurement sensor 40, this second measurement sensor 50 generates the second emission-reflection beam 51, 52 by means of chromatic confocal technology, conoscopic holography or common-path interferometry, or another type of technology, said second beam 51, 52 being a narrow beam. This narrow beam has a width of 60 micrometers, for example, wherein it can be considered for the purposes of beam emission and reflection that the beams 51, 52 are on one and the same axis. Using the first and second measurement sensors 40, 50, these narrow beam generating technologies allow improving the measurement of distances d1, d2 and sending same as measurement signals to a control unit for processing.

In this embodiment of the method, distances d1, d2 are measured in the measuring step with the container 10 in motion, while conveying said container 10 from the forming machine 200 to the next machine in the process of manufacturing the container 10. The container 10 passes through the measuring device 30 between the measurement sensors 40, 50, such that the second emission-reflection beam 51, 52 of the second measurement sensor 50 strikes, and is reflected off at least the point of incidence Bn on the outer face 11 b of the bottom 11, and the first emission beam 41 of the first measurement sensor 40 is introduced through the mouth 13 of the container 10, while said container 10 is moving, travelling with the conveyance means 20, said first emission beam 41 strikes at least point An of the inner face 11 a of the bottom 11 of the container 10, and the first reflection beam 42 is reflected, exiting the inside 12 of the container 10 through the mouth 13, reaching the first measurement sensor 40. In the embodiment shown of the measuring device 30, the first emission-reflection beam 41, 42 of the first measurement sensor 40 coincide on one and the same axis, such that although the container 10 has the maximum length-to-diameter measurement ratio, the first emission-reflection beam 41, 42 enters and exits through the mouth 13 of the container 10.

In said measuring step, the thickness e of the bottom 11 of the container 10 is calculated after obtaining the first and second measurement signals for measuring distances d1, d2 through the sensors 40, 50, respectively, and the emission thereof to a control unit 60. In said control unit 60, in a memory thereof, a distance D existing between the ends of the measurement sensors 40, 50 facing one another is defined, and a processor of said control unit 60 calculates the thickness e of the bottom 11 between the points of incidence A, B with the following formula:

$$e = D - (d1 + d2)$$

With the calculated value of the thickness e, the control unit 60 generates a measurement signal indicating thickness.

In this embodiment of the method, in order to assure that when the container 10 passes through the measuring device 30, the longitudinal axis of said container 10 is aligned with the longitudinal axis passing through the measurement sensors 40, 50 facing one another, and in order to assure that said measurement sensors 40, 50 take the measurement, said method comprises an alignment step for aligning the container 10, before the measuring step for measuring the thickness e of the bottom 11 of said container 10. In this alignment step, the outer face 11 b of the bottom 11 of the container 10 is aligned with a reference position PR defined on the conveyance means 20. Therefore, when the container 10 reaches the position of the measuring device 30 on the conveyance means 20, the measurement sensors 40, 50 are located a distance away from the inner face 11 a and from the outer face 11 b, respectively, which is within measurement ranges of said sensors 40, 50.

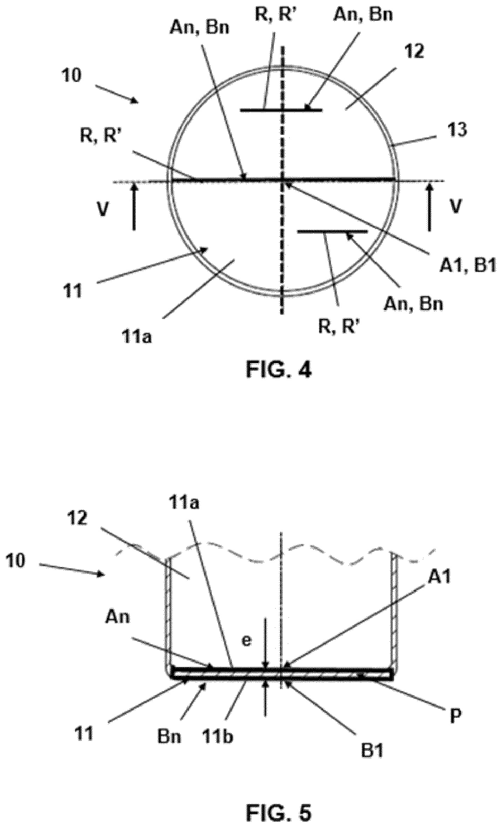

Figure 4 shows a plan view of the inner face 11 a of the bottom 11 of the container 10, wherein the thickness e of the bottom 11 has been measured at a point of incidence A1, B1 in the center of the bottom 11, or at a plurality of points of incidence An, Bn defining straight lines R, R', arranged in different locations of the bottom 11 of the container 10. Figure 5 shows a side section view of the bottom 11 of the container 10 with a profile P of the thickness e of the bottom 11 of the container 10 measured in a diameter of said container 10.

Depending on the container 10 to be manufactured and the diameter the body of said container 10 has, and in order to define the height position from the bottom 11 of the container 10, with respect to its support position for supporting the side wall of the container 10 on the conveyance means 20, which the emission beams 41, 51 are meant to strike the inner face 11 a and the outer face 11 b of the bottom 11 of the container 10, the method of the invention comprises a step for adjusting the height of the measuring device 30, which is prior to the measuring step of said method. Since the measurement sensors 40, 50 are securely attached to the measuring device 30, if the height of the structure of the measuring device 30 is adjusted, the emission beams 41, 51 will strike the inner face 11 a and the outer face 11 b of the bottom 11 of the container 10 at a greater or lesser height.

As described above, the thickness e of the bottom 11 of the container 10 is measured at a point of incidence A1, B1 on each inner face 11 a and outer face 11b of said bottom 11, respectively, and to that end the control unit 60 is programmed, for example, such that it sends activation signals to both measurement sensors 40, 50 so that they take measurements of distances d1 and d2 at the same time and at least at predetermined points of incidence An, Bn in height and in position, along the axis of the conveyance direction X, inside the faces 11 a and 11 b of the bottom 11. However, container manufacturers need to know the profile of the thickness of the container at the bottom, in order to thereby determine more precisely which containers are right for the manufacturing that is left. To that end, the measurement sensors 40, 50 are arranged in continuous measurement mode, such that since they have a given measurement range, when the respective emission beams 41, 51 are not found with the bottom 11 of a container 10, they will not be within the measurement ranges, and the thickness e will not be measured in the measuring step. In contrast, when said emission beams 41, 51 start to enter the mouth 13 of a container 10 and strike the inner face 11 a of the bottom 11 and the outer face 11 b of the bottom 11, respectively, the emission frequency of the beams is high enough, so that said emission beams 41, 51 strike and are reflected off the reflection beams 42, 52 several times for each millimeter of the bottom 11 in the conveyance direction X.

Therefore, the measurement in the measuring step is taken at a plurality of points of incidence An, Bn, at as many points n as may be obtained from the relationship between the emission frequency of the measurement sensors 40, 50, and the conveyance speed of the conveyance means 20. A respective straight line R, R' is thereby defined on the inner face and outer face 11 a, 11 b of the bottom 11 of the container 10, joining the established points of incidence An, Bn to one another. Figure 4 shows different examples of straight lines R, R' established, according to the height from the bottom 11 of the container 10 at which the thickness e is to be measured, and according to the segment of interest of said thickness e along the axis of the conveyance direction X. In a simple manner, by programming the control unit 60, a profile P of said thickness e of the bottom 11 of the container 10 in the length segment defined by the straight lines R, R', can be numerically and graphically obtained, as seen in Figure 5.

In this embodiment, the method of determining the thickness e of the bottom 11 of the container 10 also comprises a rejection step for rejecting containers 10 after calculating the thickness e in the measuring step. When the control unit 60 has calculated the thickness e and established the measurement signal indicating said thickness e, it compares said measurement signal with a presetting signal for presetting the desired thickness e of said container 10. Said presetting measurement is a standard measurement for each dimensionally different container 10, comprising a nominal value and allowed deviation tolerances, which are defined in the control unit 60. Said control unit 60 generates a rejection signal for defective containers 10 that are not dimensionally within defined tolerances. This rejection signal allows defective containers 10 concerning thickness e of the bottom 11 to be removed from the production process and to not continue being conveyed by the conveyance means to the next machine in the process.

This embodiment of the method also comprises a feedback step for automatically feeding information back to the forming machine 200, after the control unit 60 calculates the thickness e in the measuring step. To that end, the control unit 60 and the forming machine 200 are connected and can communicate by sending electrical signals. Therefore, once the control unit 60 has determined the thickness e of the bottom 11 of the container 10, and generated the measurement signal indicating said thickness e, it sends said signal to the forming machine 200. Therefore, said forming machine 200, which will in turn comprise a control unit (not shown in the drawings) receiving the measurement signal indicating thickness e, will determine whether or not to adjust the forming parameters of the body of the container 10, manufactured from the aluminum disc automatically.

A second aspect of the invention relates to an apparatus 100 for the control of containers 10 manufactured in a forming machine 200, determining the thickness e of the bottom 11 of the containers 10. Said apparatus 100 comprises conveyance means 20 for conveying the containers 10 from the forming machine 200, and the measuring device 30, said measuring device 30 comprising the first and second measurement sensors 40, 50, respectively, and the control unit 60. The measuring device 30 is formed in this embodiment by a bridge-like structure arranged over the conveyor belt configuring the conveyance means 20, the measurement sensors 40, 50 being arranged in said structure, facing one another, and on either side of the conveyor belt, the longitudinal axis of both sensors 40, 50 coinciding. The measurement sensor 40 is therefore facing the inner face 11 a of the bottom 11 through the mouth 13 of the container 10, and the measurement sensor 50 is facing the outer face 11 b of the bottom 11 of the container 10.

The measurement sensors 40, 50 measure the respective distances d1, d2 from each measurement sensor 40, 50 to the inner face 11 a and to the outer face 11 b of the bottom 11. With said measurement of the distances d1 and d2, the measurement sensors 40, 50 generate the respective first measurement signal and the respective second measurement signal.

In this embodiment of the invention, the apparatus 100 further comprises adjustment means 70 for adjusting the height of the position sensors 40, 50 which are fixed in the measuring device 30, thereby defining a position of at least the points of incidence An, Bn inside the respective inner face and respective outer face 11 a, 11 b of the bottom 11 of the container 10. For example, these adjustment means 70 for adjusting height can simply be slots in the structure of the measuring device 30 for each measurement sensor 40, 50, and pins fixing said measurement sensors 40, 50 to the structure in a position at a defined height. The adjustment means 70 can also be more complex, and said height adjustment can be done automatically or semi-automatically with pneumatic movement devices or by means of gears.

The apparatus 100 also comprises alignment means 80 for aligning the bottom 11 of the container 10 before said container 10 reaches the position of the measuring device 30, in a reference position PR defined on the conveyance means 20. In the embodiment of the apparatus 100 shown in Figures 1 and 2, the alignment means 80 consist of a ramp arranged on the conveyance means on the side corresponding to the bottom 11 of the containers 10, and ending before the containers 10 reach the measuring device 30. The alignment means 80 also comprise an air blower arranged on the conveyance means 20 on the side corresponding to the mouth 13 of the container 10. So when the containers 10 exit the forming machine 200, they are arranged lying down in the housings of the conveyance means 20 without a predetermined position. When the containers 10 reach the beginning of the ramp, which is inclined with respect to the conveyance direction X of the conveyance means 20 in a first segment, some containers 10 will be forced by the ramp to be positioned with the bottom 11 thereof in the reference position PR, defined by the second part of the ramp which is parallel to the direction X of the conveyance means 20. When the containers 10 not forced by the first part of the ramp reach the position of the air blower, they will be pushed by said blower with the air entering through the mouth 13 of said containers 10, until the bottom 11 abuts with the second part of the ramp, said bottoms 11 being positioned in the reference position PR. Therefore, when the containers 10 reach the position of the measuring device 30, the measurement sensors 40, 50 are located a respective distance from the inner face 11 a and from the outer face 11b, which is within the measurement ranges of said sensors 40, 50.

In this embodiment, the apparatus 100 also comprises rejection means 90 for rejecting containers 10. When the control unit 60 generates a measurement signal indicating thickness e of the bottom 11 corresponding to a defective container 10, it sends said signal to the rejection means 90. These rejection means 90 are activated and remove the defective container 10 from the conveyance means 20. In this embodiment of the apparatus 100, these rejection means 90 consist of an air blower, but in other embodiments it can be a mechanism, for example a pneumatic mechanism, pushing the containers 10 into a receptacle for defective containers.

## Claims

1. Method for the control of containers manufactured in a forming machine, the containers (10) comprising a mouth (13) and a bottom (11), and the thickness (e) of the bottom (11) of the containers (10) being determined by means of the method, the method comprising the following steps:

   - a conveyance step for conveying the containers (10) by conveyance means (20) from the forming machine (200), and
   - a measuring step for measuring each container (10) during the conveyance step,

   **characterized in that** during the measuring step

- a first electromagnetic radiation emission-reflection beam (41, 42) is emitted from a first measurement sensor (40), striking the inner face (11 a) of the bottom (11) of the container (10) through the mouth (13) of said container (10),

- a second electromagnetic radiation emission-reflection beam (51, 52) is emitted simultaneously from a second measurement sensor (50), arranged facing the first measurement sensor (40), striking the outer face (11 b) of the bottom (11) of the container (10),

- a first measurement signal being obtained with the distance (d1) between the first measurement sensor (40) and the inner face (11a) of the bottom (11) of the container (10), and a second measurement signal being obtained with the distance (d2) between the second measurement sensor (50) and the outer face (11 b) of the bottom (11) of the container (10), and

- the thickness (e) of the bottom (11) being calculated from said distances (d1, d2) and the distance (D) between both measurement sensors (40, 50), a measurement signal indicating thickness being obtained with said thickness (e).

2. Method according to claim 1, wherein the first beam (41, 42) is a narrow beam, said first beam (41, 42) preferably being generated by means of chromatic confocal technology, conoscopic holography or common-path interferometry.

3. Method according to any of claims 1 to 3, wherein the second beam (51, 52) is a triangular beam, said second beam (51, 52) preferably being generated with laser technology, or it is a narrow beam, said second beam (51, 52) preferably being generated with chromatic confocal technology, conoscopic holography or common-path interferometry.

4. Method according to any of the preceding claims, wherein the containers are in motion during the measuring step.

5. Method according to any of the preceding claims, wherein the measurement in the measuring step is taken at a plurality of points of incidence (An, Bn) defining a respective straight line (R, R') on the inner face and outer face (11a, 11b) of the bottom (11) of the container (10), said straight lines (R, R') defining a profile (P) of the bottom (11).

6. Method according to claim 5, wherein the number of points of incidence (An, Bn) is a function of the speed of the conveyance means (20) and the frequency of the beams (41, 42, 51, 52).

7. Method according to any of the preceding claims, comprising an alignment step for aligning the container (10), before the measuring step, in a reference position (PR) on the conveyance means (20) with respect to the measurement sensors (40, 50).

8. Method according to any of the preceding claims, comprising a feedback step for feeding information back to the forming machine (200), after calculating the thickness (e) in the measuring step, said forming machine (200) receiving the measurement signal indicating thickness (e) for regulating forming parameters of the container (10), the method also preferably comprising a rejection step for rejecting containers (10) after calculating the thickness (e) in the measuring step, each measurement signal indicating thickness (e) of the bottom (11) of each container (10) being compared with a presetting signal for presetting the desired thickness (e) of said container (10), comprising a nominal value and allowed deviation tolerances, a rejection signal being generated for containers (10) with a thickness (e) outside said tolerances.

9. Method according to any of the preceding claims, wherein the container (10) has width measurements between 25 and 80 millimeters, length measurements between 50 and 300 millimeters, side wall thickness measurements between 0.1 and 0.8 millimeters, and bottom thickness measurements between 0.20 and 2 millimeters, the width-to-length ratio of the container (10) being about one to three, and the container (10) being made from metal, preferably aluminum or an aluminum alloy.

10. Apparatus for the control of containers manufactured in a forming machine, the containers (10) comprising a mouth (13) and a bottom (11), and the thickness (e) of the bottom (11) of the containers (10) being determined by means of the apparatus, the apparatus (100) comprising:

- conveyance means (20) for conveying the containers (10) from the forming machine (200), and
- a measuring device (30) arranged next to the conveyance means (20),

**characterized in that** the measuring device (30) comprises

- a first measurement sensor (40) configured for emitting a first electromagnetic radiation emission-reflection beam (41, 42) striking at least one point of incidence (An) of the inner face (11 a) of the bottom (11) of the container (10) through the mouth (13) of said container (10),
- a second measurement sensor (50) arranged facing the first measurement sensor (40), configured for emitting a second electromagnetic radiation emission-reflection beam (51, 52) striking at least one point of incidence (Bn) of the outer face (11 b) of the bottom (11) of the container (10), and

- a control unit (60) configured for calculating the thickness (e) of the bottom (11) of the container, from a first measurement signal with the distance (d1) between the first measurement sensor (40) and the inner face (11 a) of the bottom (11) of the container (10), a second measurement signal with the distance (d2) between the second measurement sensor (50) and the outer face (11b) of the bottom (11) of the container (10), and the distance (D) between both measurement sensors (40, 50), generating a measurement signal indicating thickness with the thickness (e).

11. Apparatus according to claim 10, wherein the first beam (41, 42) is a narrow beam, said first beam (41, 42) preferably being generated by means of chromatic confocal technology, conoscopic holography or common-path interferometry.

12. Apparatus according to claim 10 or 11, wherein the second beam (51, 52) is a triangular beam, said second beam (51, 52) preferably being generated with laser technology, or it is a narrow beam, said second beam (51, 52) preferably being generated with chromatic confocal technology, conoscopic holography or common-path interferometry.

13. Apparatus according to any of claims 10 to 12, comprising adjustment means (70) for adjusting the height of the position sensors (40, 50) of the measuring device (30), defining a position of the points of incidence (An, Bn) inside the respective inner face and outer face (11a, 11 b) of the bottom (11) of the container (10).

14. Apparatus according to any of claims 10 to 13, comprising alignment means (80) for aligning the container (10) in a reference position (PR) on the conveyance means (20), with respect to the measurement sensors (40, 50) of the measuring device (30), defining a position of the points of incidence (An, Bn) with respect to the position of the measurement sensors (40, 50) within the measurement range of said position sensors (40, 50).

15. Apparatus according to any of claims 10 to 14, comprising rejection means (90) for rejecting containers (10) that receive a rejection signal from the control unit (60), and remove the rejected container (10) from the conveyance means (20).

**FIG. 1**

**FIG. 2**

FIG. 3

10

R, R'    An, Bn

An, Bn    R, R'    An, Bn    12

13

V    V

A1, B1

11

11a    R, R'

FIG. 4

11a

12    A1

10

An    e

P

11    Bn    11b    B1

FIG. 5

Europäisches
Patentamt

European
Patent Office

Office européen
des brevets

# EUROPEAN SEARCH REPORT

**Application Number**

EP 17 38 2284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 693 275 B1 (STORK WILMER D [US] ET AL) 17 February 2004 (2004-02-17) * abstract; figures 1,2,4 * * column 2, line 39 - column 4, line 3 * ----- | 1-15 | INV. G01B11/06 |
| X | DE 10 51 016 B (RUHRSTAHL AKTIENGESELLSCHAFT) 19 February 1959 (1959-02-19) * column 3, line 9 - column 4, line 30; figure 1 * * column 6, lines 20-36 * ----- | 1-9 | |

**TECHNICAL FIELDS SEARCHED (IPC)**

G01B

The present search report has been drawn up for all claims

| Place of search | Date of completion of the search | Examiner |
|---|---|---|
| Munich | 13 September 2017 | Passier, Martinus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 38 2284

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2017

| Patent document cited in search report | | Publication date | Patent family member(s) | | Publication date |
|---|---|---|---|---|---|
| US 6693275 | B1 | 17-02-2004 | BR<br>CA<br>MX<br>US | 0101134 A<br>2340965 A1<br>PA01003062 A<br>6693275 B1 | 30-10-2001<br>23-09-2001<br>30-07-2004<br>17-02-2004 |
| DE 1051016 | B | 19-02-1959 | NONE | | |

EPO FORM P0459

For more details about this annex : see Official Journal of the European Patent Office, No. 12/82

**EP 3 404 357 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0388949 A2